# EUROPÄISCHE PATENTSCHRIFT

(11) **EP 2 439 046 B1**
(45) Veröffentlichungstag und Bekanntmachung des Hinweises auf die Patenterteilung: **30.07.2014**
(21) Anmeldenummer: 10013444.4
(22) Anmeldetag: 08.10.2010
(51) Int. Cl.: B29C 49/56

(54) **Werkzeugschließsystem für Kunststoffblasmaschinen**
Tool closing system for plastic blowing machines
Système de fermeture d'outil pour machines de soufflage en matière synthétique

(43) Veröffentlichungstag der Anmeldung: 11.04.2012
(73) Patentinhaber: BEKUM Maschinenfabriken GmbH, 12107 Berlin (DE)
(72) Erfinder: Hennemann, Ullrich, 3133 Traismauer (AT); Müller, Detlef, 74523 Schwäbisch Hall (DE); Böhm, Andreas, 12279 Berlin (DE)
(74) Vertreter: Flosdorff, Jürgen

(56) Entgegenhaltungen:
- EP-A1- 0 554 068
- WO-A1-96/19331
- DE-A1- 4 443 195
- DE-A1- 19 528 751
- DE-C1- 4 426 521

## Beschreibung

Die Erfindung betrifft ein Werkzeugschließsystem für Kunststoffblasmaschinen.

Es sind verschiedene Bauarten von Werkzeugschließsystemen für Blasformmaschinen bekannt. Eine bei verschiedenen Maschinenherstellern verwendete Bauform bewirkt eine symmetrische Krafteinleitung über einen unterhalb der Form angeordneten Antrieb und einen symmetrischen Hebelmechanismus. In der Praxis stört dieser untenliegende Antrieb jedoch bei verschiedenen Produktionsvarianten. Durch die verwendete Hebelmechanik ist zudem der mechanische Aufbau relativ aufwändig und eine Vergrößerung des Öffnungshubes nur schwer möglich.

Eine weitere übliche Bauform ist das sogenannte 3-Plattensystem. Der Antrieb ist bei diesem System hinter der 3. Platte (sog. Querhaupt) angeordnet. Das synchrone Zufahren der beiden Formhälften auf eine gemeinsame Formtrennebene wird üblicherweise über einen Zahnstangen- oder Hebelgleichlauf gewährleistet. Vorteile dieses Systems sind die relativ einfache Kompensation unterschiedlicher Formdicken und Hübe sowie die gute Zugänglichkeit der Form von unten für Kühlung, Abfallbänder und Untenblasstation. Von Nachteil sind die Verformungen im Bereich der Führungen der Schließplatte, die insbesondere durch das systembedingt an der vorderen Schließplatte erzeugte Biegemoment entstehen. Zur Kompensation dieser Verformungen ist ein relativ hoher Aufwand erforderlich. Insbesondere bei größeren Formüberständen entstehen Probleme mit der Kraftverteilung, die sich durch den konstruktiven Aufbau des gesamten Kraftsystems nicht ohne weiteres lösen lassen.

Weitere bekannte Schließeinheitssysteme arbeiten ebenfalls mit "hinten" liegendem Antrieb und versuchen die Einleitung von Biegung in das Führungssystem der Formaufspannplatten durch sehr aufwändig gestaltete Hebelmechaniken oder Zwischenplatten zu verhindern.

DE 44 26 521 C1 offenbart ein Werkzeugschließsystem für Kunststoffblasmaschinen mit einer Antriebsgrundplatte, einer vorderen Formaufspannplatte und einer zwischen der vorderen Formaufspannplatte und der Antriebsgrundplatte positionierten hinteren Formaufspannplatte, wobei die Antriebsgrundplatte, die vordere Formaufspannplatte und die hintere Formaufspannplatte Führungselemente aufweisen, die auf Führungen verschieblich angeordnet sind, die auf einem Maschinenständer angebracht sind. Eine Antriebseinrichtung ist an der Antriebsgrundplatte befestigt, die eine ausfahrbare und zurückziehbare Antriebsstange aufweist, die an der hinteren Formaufspannplatte angreift. Der Maschinenständer enthält zwei vertikale Stützelemente, an denen sich bei einwirkender Schließkraft die Antriebsgrundplatte und die vordere Formaufspannplatte abstützen, und zwar über lose Lagerelemente, die eine Verschiebung zwischen der Antriebsgrundplatte und einem Stützelement sowie zwischen der hinteren Formaufspannplatte und dem anderen Stützelement in senkrechter Richtung zulassen. Die Schließkräfte werden in den stationären Maschinenständer eingeleitet, der hierzu sehr massiv, mit hohem Gewicht, ausgebildet sein muss, sich aber trotzdem verformt. Deshalb wird der an dem Maschinenständer über Gelenke befestigte Führungsträger auf Zug beansprucht und verformt sich dabei.

Der vorliegenden Erfindung liegt die Aufgabe zugrunde, ein Schließsystem anzugeben, das die Einleitung von Biegemomenten in die Plattenführungselemente ausschließt, einen aus Kostengründen stark vereinfachten Aufbau aufweist und eine größtmögliche Zugänglichkeit unterhalb der Blasformen erlaubt. Die Möglichkeit unterschiedlicher Formdicken und Öffnungshübe soll wie bei dem bekannten 3-Plattensystem erhalten bleiben.

Diese Aufgabe wird erfindungsgemäß durch die Merkmale des Patentanspruchs 1 gelöst. Vorteilhafte Ausgestaltungen der Erfindung sind in den Unteransprüchen gekennzeichnet.

Die Erfindung sieht vor, dass das System der Führungselemente der Formaufspannplatten, die zum Beispiel Linearführungen, Holme oder andere geeignete Systeme sein können, in der Art mit dem System der Krafteinleitung in die Formaufspannplatten verbunden ist, dass eine Einleitung von Biegemomenten in die Führungselemente durch das Kraftübertragungssystem ausgeschlossen ist. Zur Kraftübertragung zwischen den Formaufspannplatten werden zwei parallel nebeneinander angeordnete sogenannte C-Rahmenelemente beziehungsweise etwa U-förmige Rahmenelemente verwendet. Durch die gewählte Anordnung wird erreicht, dass die im Kraftübertragssystem auftretenden Verformungen keinen Einfluss auf die Führungsqualität der Formaufspannplatten haben, die damit stets parallel zueinander bleiben. Das erfindungsgemäße System bewirkt ein Auftreten von Verformungen nahezu ausschließlich im Bereich der C-förmigen Rahmenelemente, nicht jedoch im Bereich der Führungen. Dabei ist durch den einfachen kinematischen Aufbau mit lediglich zwei Gelenkpunkten der Rahmenelemente gewährleistet, dass ein kostenmäßig vorteilhaftes Werkzeugschließsystem herstellbar ist.

Die C-förmigen Rahmenelemente können auch aus mehreren Teilen zusammengesetzt sein, zum Beispiel Holme und Endstücke.

Die Gelenkpunkte zur Kraftübertragung vom C-Rahmen auf die Forrnaufspannplatte und die Antriebsgrundplatte können in verschiedenen Ausführung erstellt werden. Bekannt und allgemein üblich sind zum Beispiel Bolzenkonstruktionen oder Axialdrucklager mit Schwenkmöglichkeit. Wichtig für die erfindungsgemäße Funktion ist lediglich die weitgehend biegemomentfreie Kraftübertragung über die Gelenkpunkte . Denkbar sind anstelle der biegemomentfreien Gelenke auch Biegegelenke in entsprechender Ausführung.

Ein weiterer Vorteil des erfindungsgemäßen Werkzeugschließsystems ist die gute Zugänglichkeit der Form von unten für eine Untenblasstation und für die Untenkalibrierung.

In weiterer Ausgestaltung der Erfindung wird vorgeschlagen, dass die Antriebsgrundplatte und die beiden Formaufspannplatten mit Ansätzen fest verbunden sind, an denen die im wesentlichen C-förmigen Rahmenelemente beziehungsweise die Antriebsstange angelenkt sind, wobei sich die Ansätze der beiden Formaufspannplatten im wesentlichen über deren gesamte Breite erstrecken, so dass die Kräfte perfekt über die gesamte Breite verteilt in den Blasformbereich eingeleitet werden. Die Formaufspannplatten werden im belasteten Zustand weder gebogen noch führen sie eine Kippbewegung um die Führungen aus, sondern sie bleiben vollständig parallel zueinander. Die Führungselemente der Formaufspannplatten werden nicht für die Übertragung der Schließkraft genutzt.

Mit großem Vorteil ist ferner vorgesehen, dass die Gelenkpunkte, an denen die Antriebsstange die Schließkraft auf den Ansatz der hinteren Formaufspannplatte überträgt, und an denen die Kraftübertragung auf beziehungsweise von den C-förmigen Rahmenelementen erfolgt, auf einer gemeinsamen horizontalen Linie liegen, die mit der Längsmittelachse der Antriebsstange in der Höhe übereinstimmt.

Die im wesentlichen C-förmigen Rahmenelemente können durch ebene Bleche einer geeigneten Dicke gebildet sein, wobei die Biegung der beiden abgewinkelten Randstege im Belastungsfall unter 0,5 Millimeter liegen kann.

Das erfindungsgemäße Werkzeugschließsystem ist für unterschiedliche Formdicken und Öffnungshübe geeignet. Der Kalibrierprozess ist mit einer äußerst geringen Abnutzung verbunden.

Das erfindungsgemäße System ist sowohl für Einseitenmaschinen als auch für Mehrseitenmaschinen geeignet.

Weitere Vorteile und Einzelheiten der Erfindung ergeben sich aus der nachfolgenden Beschreibung sowie anhand der Zeichnungen. Dabei zeigen:
- Fig. 1: eine Ausführungsform des erfindungsgemäßen Schließsystems im geschlossenen Zustand in einer rein schematischen Seitenansicht und in einer Aufsicht;
- Fig. 2: das Schließsystem der Figur 1 im geöffneten Zustand;
- Fig. 3: eine Ansicht eines C-förmigen Rahmenelementes mit gestrichelt dargestellter Verformung bei Belastung;
- Fig. 4-6: eine zweite Ausführungsform in den Figuren 1 bis 3 entsprechenden Darstellungen.

Auf einem Wagengestell 1, das in Querrichtung zur Zeichenebene zwischen einer Extruderstation und einer Blasstation verfahrbar ist, sind in der Zeichenebene verlaufende Führungen 2 angebracht, auf denen eine Antriebsgrundplatte 3, eine hintere Formaufspannplatte 4 und eine vordere Formaufspannplatte 5 verschieblich sitzen, die hierzu mit zu den Führungen 2 passenden Führungselementen 6 versehend sind. An den Formaufspannplatten 4 und 5 sind die Formhälften einer Blasform 6 befestigt.

An der Rückseite der Antriebsgrundplatte 3 ist eine Antriebseinrichtung 7 angebracht, die mit einer ausfahrbaren und zurückziehbaren Antriebsstange 8 versehen ist. An der Rückseite der hinteren Formaufspannplatte 4 ist ein sich im wesentlichen über die gesamte Breite der Formaufspannplatte 4 erstreckender plattenförmiger Ansatz 9 fest angesetzt, mit dem die Antriebsstange 8 gelenkig verbunden ist, so dass diese nur in Richtung der Längsmittelachse 10 verlaufende Zug- und Druckkräfte auf den Ansatz 9 und damit auf die hintere Aufspannplatte 4 übertragen kann, jedoch keine Biegemomente.

An der Antriebsgrundplatte, durch die die Antriebsstange in Breitenrichtung mittig hindurch läuft, sind zwei seitliche Vorsprünge 11 fest angesetzt, mit denen zwei parallel zu den Führungen verlaufende im wesentlichen C-förmige Rahmenelemente 12 gelenkig verbunden sind. Die Gelenke sind bei der dargestellten Ausführungsform durch Bolzen 13 gebildet, die zugehörige Löcher in dem oberen Endabschnitt des im wesentlichen vertikalen hinteren Stegs 14 des Rahmenelementes 12 durchgreifen. Das C-förmige Rahmenelement 12 hat ferner einen im wesentlichen horizontalen Mittelsteg 15, der in einen vorderen im wesentlichen vertikalen Steg 16 übergeht, der spiegelbildlich dieselbe Form hat wie der hintere vertikale Steg 14.

Von der vorderen Formaufspannplatte 5 steht ein sich ebenso wie der Vorsprung 9 nahezu über die gesamte Breite erstreckender Ansatz 17 zur Vorderseite des Werkzeugschließsystems hin ab, der fest mit der Formaufspannplatte 5 verbunden ist. Der obere Endabschnitt der beiden im wesentlichen vertikalen Stege 16 ist an dem Ansatz 17 an Gelenkpunkten 18 angelenkt, die in den Figuren ebenfalls als Bolzen angedeutet sind. Die Gelenkpunkte 13 und 18 der C-förmigen Rahmenelemente 12 sowie der Gelenkpunkt 19, an dem die Antriebsstange 8 angelenkt ist, befinden sich in der gleichen Höhe, das heißt auf der Mittellängsachse 7. Mit dem Bezugszeichen 20 ist ein Gleichlauf bezeichnet, der zwei parallele Zahnstangen 21 und ein dazwischen angeordnetes Zahnrad 22 enthält. Die Zahnstangen 21 sind an der Antriebsgrundplatte 3 und der hinteren Formaufspannplatte 4 befestigt.

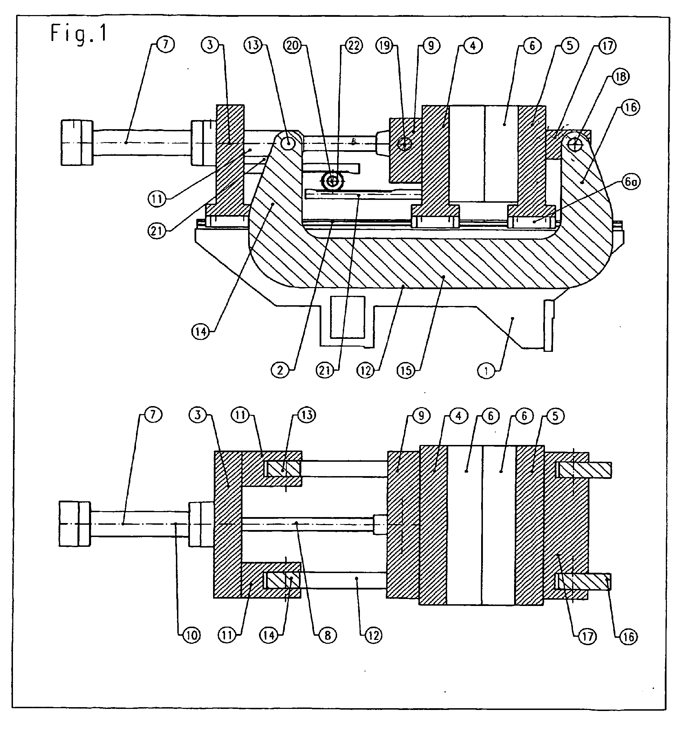

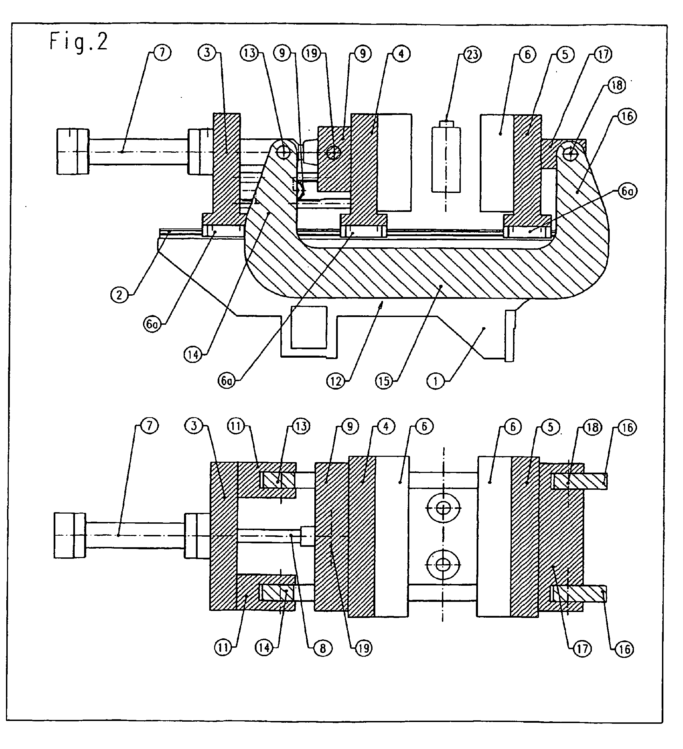

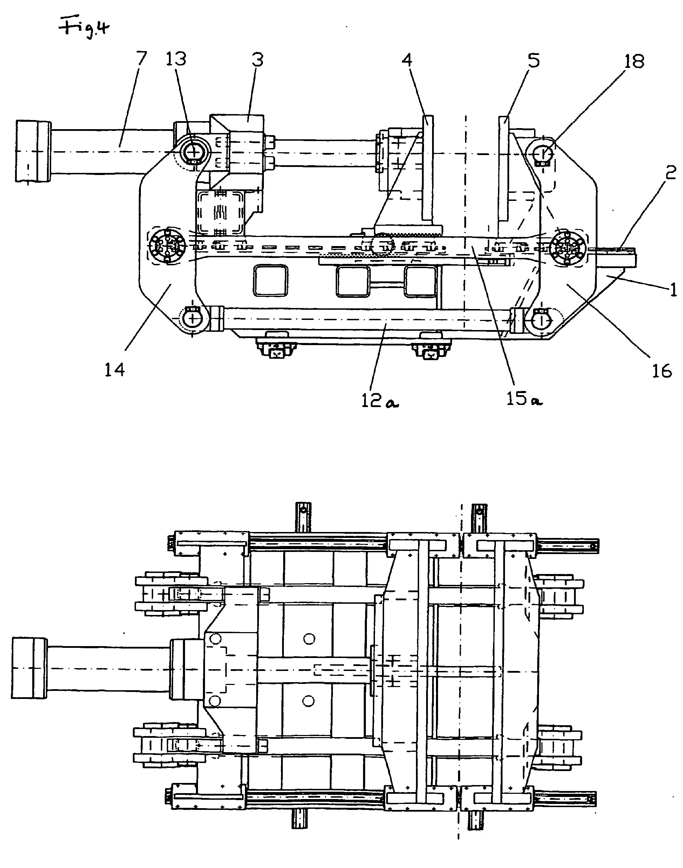

In dem in Figur 2 dargestellten Zustand sind die Formaufspannplatten 4 und 5 mit den daran befestigten Formhälften 6 geöffnet, so dass ein geblasener Artikel 23 entnommen werden kann (oder an der Extruderstation ein neuer Vorformling aufgenommen werden kann). Ein Vergleich mit Figur 1 zeigt, dass die Anordnung aus den drei Platten 3, 4 und 5 und den C-förmigen Rahmenelementen 12 in der Darstellung nach rechts verschoben ist. Wenn die Schließkraft von der Antriebseinrichtung 7 beziehungsweise der Antriebsstange 8 biegemomentfrei auf die hintere Formantriebsplatte 4 und damit auf die Blasform 6 übertragen wird, erfolgt gleichzeitig eine Kraftübertragung über das C-förmige Rahmenelement 12 auf die vordere Schließplatte 5, wobei die Kraft weitgehend biegemomentfrei über den Gelenkpunkt 13 in das C-förmige Rahmenelement 12 eingeleitet und über den Gelenkpunkt 18 ebenso weitgehend biegemomentfrei auf die vordere Schließplatte 5 übertragen wird. Infolge der nach hinten gerichteten Reaktionskraft wird dabei die Anordnung aus den drei Platten 3, 4 und 5 und den C-förmigen Rahmenelementen 12 auf den Führungen 2 in der Darstellung der Figur 1 nach links verschoben. Dabei verformen sich die beiden C-förmigen Rahmenelemente 12 so, dass die beiden im wesentlichen vertikalen Stege 14 und 16 elastisch auseinander gebogen werden, wie Figur 4 zeigt. Wenn die Form 6 geöffnet wird, führt dies dazu, dass die Anordnung aus den drei Platten und den C-förmigen Rahmenelementen auf den Führungen 2 wieder nach rechts verschoben werden.

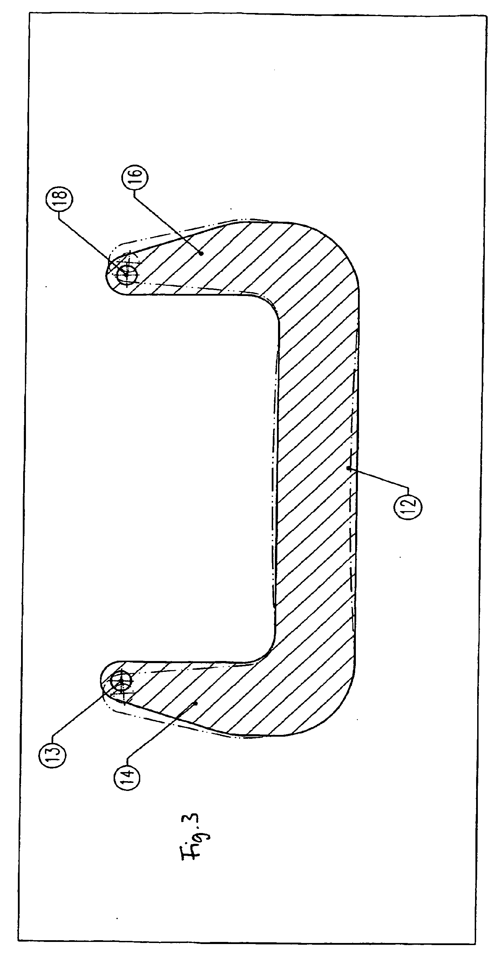

Figur 3 zeigt in einer vergrößerten Ansicht das etwa C- bzw. U-förmige Rahmenelement 12 in durchgezogenen Linien im unbelasteten Zustand und mit gestrichelt dargestellter Verformung bei Belastung.

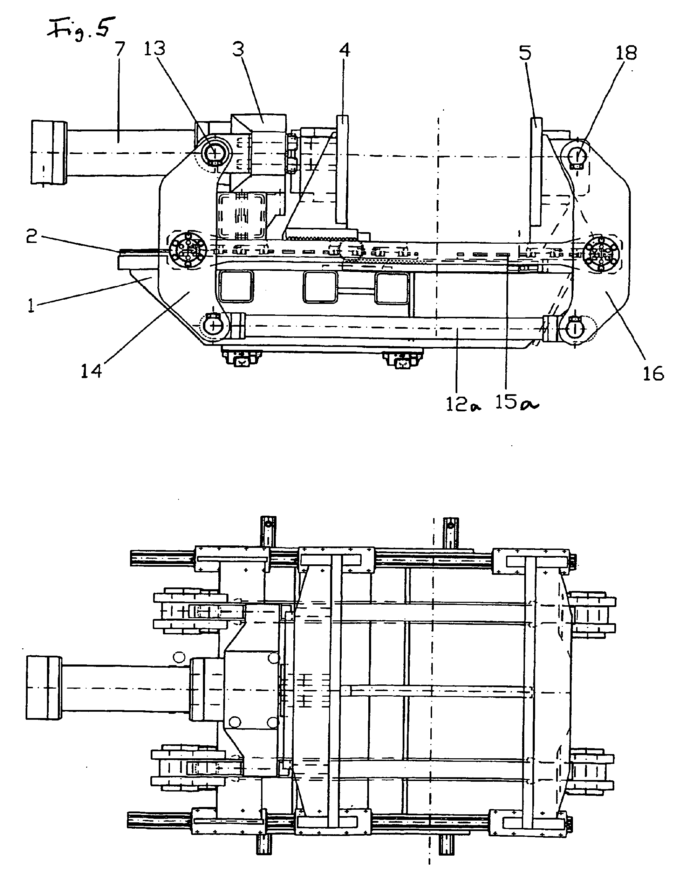

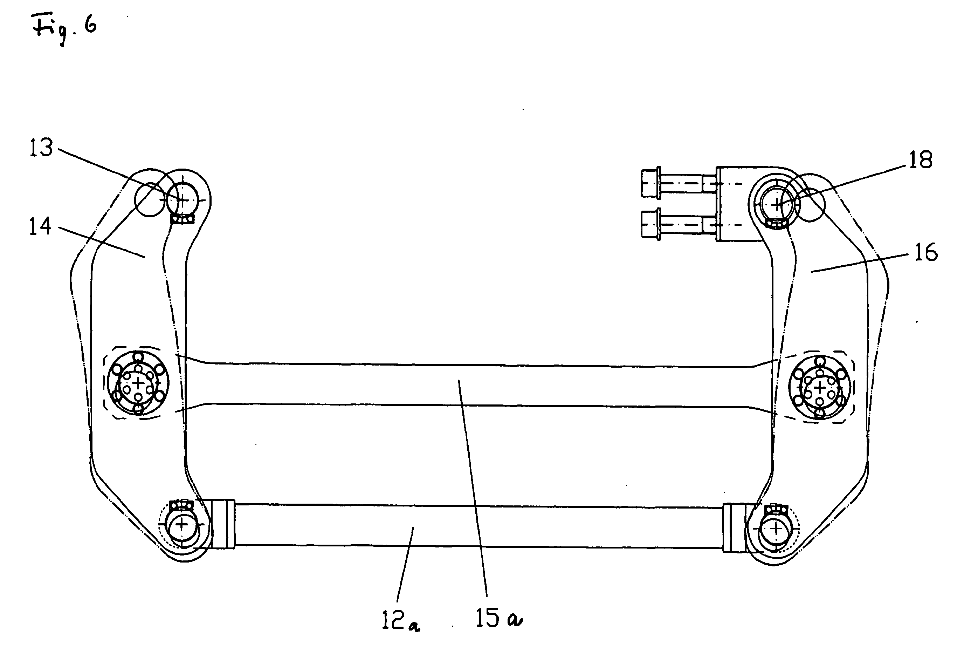

Da das C- bzw. U-förmige Rahmenelement 12 erheblichen Beanspruchungen in Form von Biegung, Dehnung und Stauchung ausgesetzt ist, kann das Rahmenelement aus verschiedenen Elementen zusammengesetzt sein, die jeweils nur einer Beanspruchung unterliegen. Die Figuren 4 bis 6 zeigen eine zweite Ausführungsform des erfindungsgemäßen Werkzeugschließsystems in den Figuren 1 bis 3 entsprechenden Darstellungen. Bei dieser Ausführungsform sind die im wesentlichen vertikalen Stege 14 und 16, ein unterer horizontaler Steg 12 und ein etwa auf halber Höhe der vertikalen Stege 14 und 16 angeordneter horizontaler Steg 15a durch Gelenke miteinander verbunden, die durch Bolzen realisiert sind. Die Schließkraft wirkt sich auf die getrennten Elemente so aus, dass sie bei den vertikalen Elementen 14 und 16 eine reine Biegebeanspruchung, bei dem horizontalen Element 12a eine Druckbeanspruchung und bei dem etwa auf halber Höhe der vertikalen Elemente 14 und 16 angelenkten Element 15a eine Zugbeanspruchung hervorruft. Vorraussetzung hierfür ist die freie Beweglichkeit an allen Verbindungsstellen.

Im übrigen entspricht der Aufbau der zweiten Ausführungsform derjenigen der ersten Ausführungsform.

Die C-förmigen oder U-förmigen Rahmenelemente haben durch ihre Formgebung zur Folge, dass die Blasform von beiden Seiten frei zugänglich ist.

## Patentansprüche

1. Werkzeugschließsystem für Kunststoffblasmaschinen, mit einer Antriebsgrundplatte (3), einer vorderen Formaufspannplatte (5) und einer zwischen der vorderen Formaufspannplatte (5) und der Antriebsgrund-platte (3) positionierten hinteren Formaufspannplatte (4),
wobei die Antriebsgrundplatte (3), die vordere Formaufspannplatte (5) und die hintere Formaufspannplatte (4) Führungselemente (6a) aufweisen, die auf Führungen (2) verschieblich angeordnet sind, die auf einem Wagengestell (1) angebracht sind,
und einer Antriebseinrichtung (7), die an der Antriebsgrundplatte (3) befestigt ist und eine ausfahrbare und zurückziehbare Antriebsstange (8) aufweist, die zur Biegemoment-freien Kraftübertragung mittels Gelenk (19) mit der hinteren Formaufspannplatte (4) verbunden ist,
**gekennzeichnet durch**
zwei im Abstand nebeneinander parallel zu den Führungen (2) angeordnete, im wesentlichen C-förmige oder etwa U-förmige Rahmenelemente (12), die jeweils einen im wesentlichen horizontal verlaufenden Mittelsteg (15) und zwei im wesentlichen vertikal verlaufende Stege (14, 16) aufweisen,
wobei jeweils einer (14) der beiden im wesentlichen vertikalen Stege gelenkig mit der Antriebsgrundplatte (3) und der andere (16) im wesentlichen vertikale Steg mittels eines weiteren Gelenks (18) mit der vorderen Formaufspannplatte (5) verbunden ist, so dass die Rahmenelemente (12) mit der Antriebsgrundplatte (3) und der vorderen Formaufspannplatte (5) verschieblich sind.

2. Werkzeugschließsystem nach Anspruch 1,
**dadurch gekennzeichnet,**
**dass** die Antriebsgrundplatte (3) und die beiden Formaufspannplatten (4, 5) mit Ansätzen (11, 9, 17) fest verbunden sind, an denen die im wesentlichen C-förmigen Rahmenelemente (12) beziehungsweise die Antriebsstange (8) angelenkt sind.

3. Werkzeugschließsystem nach Anspruch 1 oder 2,
**dadurch gekennzeichnet,**
**dass** die Gelenke (13, 18, 19) zur Kraftübertragung auf einer gemeinsamen horizontalen Linie liegen.

4. Werkzeugschließsystem nach Anspruch 3,
**dadurch gekennzeichnet,**
**dass** die Gelenke (13, 18, 19) durch Bolzenkonstruktionen gebildet sind.

5. Werkzeugschließsystem nach Anspruch 3,
**dadurch gekennzeichnet,**
**dass** die Gelenke durch Axialdrucklager mit Schwenkmöglichkeit gebildet sind.

6. Werkzeugschließsystem nach Anspruch 3,
**dadurch gekennzeichnet,**
**dass** die Gelenke durch Biegegelenke gebildet sind.

7. Werkzeugschließsystem nach einem der Ansprüche 1 bis 6,
**dadurch gekennzeichnet,**
**dass** die im wesentlichen C-förmigen oder U-förmigen Rahmenelemente (12) durch ebene Bleche gebildet sind.

8. Werkzeugschließsystem nach einem der Ansprüche 1 bis 6,
**dadurch gekennzeichnet,**
**dass** die Rahmenelemente aus gelenkig miteinander verbundenen Elementen (14, 16, 15a, 12a) bestehen.

9. Werkzeugschließsystem nach einem der Ansprüche 1 bis 7,
**dadurch gekennzeichnet,**
**dass** die Antriebseinrichtung (7) aus einem hydraulischen, elektrischen oder pneumatischen Antrieb oder einer Kombination davon besteht.

## Claims

1. A tool closing system for plastic blow moulding machines with a drive base plate (3), a front mould clamping plate (5) and a rear mould clamping plate (4) positioned between the front mould clamping plate (5) and the drive base plate (3), wherein the drive base plate (3), the front mould clamping plate (5) and the rear mould damping plate (4) have guide elements (6a), which are movably arranged on guides (2), which are mounted on a carriage frame (1), and a drive device (7), which is secured to the drive base plate (3) and includes an extendable and retractable drive rod (8), which is connected to the rear mould clamping plate (4) for the purpose of force transmission without bending moment by means of a joint (19), **characterised by** two substantially C shaped or approximately U shaped frame elements (12), which are arranged spaced from one another and parallel to the guides (2) and which each have a substantially horizontally extending central web (15) and two substantially vertically extending webs (14, 16), wherein a respective one (14), of the two substantially vertical webs is hingedly connected to the drive base plate (3) and the other (16) substantially vertical web is connected by means of a further joint (18) to the front mould clamping plate (5) so that the frame elements (12) are movable with the drive base plate (3) and the front mould clamping plate (5).

2. A tool closing system as claimed in claim 1, **characterised in that** the drive base plate (3) and the two mould clamping plates (4, 5) are rigidly connected to formations (11, 9. 17), to which the substantially C shaped frame elements (12) or the drive rod (8) are hingedly connected.

3. A tool closing system as claimed in claim 1 or 2, **characterised in that** the joints (13, 18, 19) for the transmission of force lie on a common horizontal line.

4. A tool closing system as claimed in claim 3, **characterised in that** the joints (13, 18, 19) are constituted by peg structures.

5. A tool closing system as claimed in claim 3, **characterised in that** the joints are constituted by axial thrust bearings with a pivoting facility.

6. A tool closing system as claimed in claim 3, **characterised in that** the joints are constituted by a flexible joints.

7. A tool closing system as claimed in one of claims 1 to 6, **characterised in that** the substantially C shaped or U shaped frame elements (12) are constituted by flat metal plates.

8. A tool closing system as claimed in one of claims 1 to 6, **characterised in that** the frame elements consist of elements (14, 16, 15a, 12a) hingedly connected together.

9. A tool closing system as claimed in one of claims 1 to 7, **characterised in that** the drive device (7) consists of hydraulic, electrical or pneumatic drive or a combination thereof.

## Revendications

1. Système de fermeture d'outil pour des machines de soufflage de matière plastique avec une plaque de base d'entraînement (3), une plaque de serrage de moule avant (5) et une plaque de serrage de moule arrière (4) positionnée entre la plaque de serrage de moule avant (5) et la plaque de base d'entraînement (3),
la plaque de base d'entraînement (3), la plaque de serrage de moule avant (5) et la plaque de serrage de moule arrière (4) présentant des éléments de guidage (6a) disposés de manière mobile sur des guidages (2) qui sont montés sur un châssis de voiture (1),
et un dispositif d'entraînement (7) qui est fixé sur la plaque de base d'entraînement (3) et présente une tige d'entraînement (8) déployable et rétractable qui est reliée pour la transmission de force sans couple de flexion à l'aide d'une articulation (19) à la plaque de serrage de moule arrière (4),
**caractérisé par** :
deux éléments de cadre (12) à peu près en U ou sensiblement en C, disposés à distance l'un à côté de l'autre, parallèlement aux guidages (2), qui présentent respectivement une traverse médiane (15) s'étendant sensiblement horizontalement et deux traverses (14, 16) s'étendant sensiblement verticalement,
respectivement l'une (14) des deux traverses sensiblement verticales étant reliée par une articulation à la plaque de base d'entraînement (3) et l'autre (16) traverse sensiblement verticale étant reliée à l'aide d'une autre articulation (18) à la plaque de serrage de moule avant (5) de sorte que les éléments de cadre (12) soient mobiles avec la plaque de base d'entraînement (3) et la plaque de serrage de moule avant (5).

2. Système de fermeture d'outil selon la revendication 1,
**caractérisé en ce que**
la plaque de base d'entraînement (3) et les deux plaques de serrage de moule (4, 5) sont fixement reliées avec des saillies (11, 9, 17), auxquelles les éléments de cadre (12) sensiblement en C ou la tige d'entraînement (8) sont articulés.

3. Système de fermeture d'outil selon la revendication 1 ou 2,
**caractérisé en ce que**
les articulation (13, 18, 19) se situent. pour la transmission de force sur une ligne horizontale commune.

4. Système de fermeture d'outil selon la revendication 3,
**caractérisé en ce que**
les articulations (13, 18, 19) sont constituées par des constructions de boulons.

5. Système de fermeture d'outil selon la revendication 3,
**caractérisé en ce que**
que les articulations sont constituées par des paliers de pression axiale avec possibilité de picotement.

6. Système de fermeture d'outil selon la revendication 3,
**caractérisé en ce que**
les articulations sont formées par des articulations de flexion.

7. Système de fermeture d'outil selon l'une quelconque des revendications 1 à 6,
**caractérisé en ce que**
les éléments de cadre (12) en U ou sensiblement en C sont formés par des tôles planes.

8. Système de fermeture d'outil selon l'une quelconque des revendications 1 à 6,
**caractérisé en ce que**
les éléments de cadre se composent d'éléments (14, 16, 15a, 12a) reliés entre eux par articulation.

9. Système de fermeture d'outil selon l'une quelconque des revendications 1 à 7,
**caractérisé en ce que**
le dispositif d'entraînement (7) se compose d'un entraînement hydraulique, électrique ou pneumatique ou d'une combinaison de ceux-ci.
